# EUROPÄISCHE PATENTANMELDUNG

(11) **EP 3 840 302 A1**
(43) Veröffentlichungstag der Anmeldung: **23.06.2021**
(21) Anmeldenummer: 19217190.8
(22) Anmeldetag: 17.12.2019
(51) Int. Cl.: H04L 12/40, H04L 29/06

(54) **ZUGRIFFSRECHTEMANAGEMENT BEI TECHNISCHEN ANLAGEN**

(71) Anmelder: Siemens Aktiengesellschaft, 80333 München (DE)
(72) Erfinder: Lutz, Benjamin, 76327 Pfinztal (DE)

(57) **Zusammenfassung**

Vorgeschlagen wird ein Leitsystem (7) für eine technische Anlage, insbesondere eine Fertigungs- oder Prozessanlage, das wenigstens einen Operator Station Client (9) und wenigstens einen Operator Station Server (8) aufweist, die für eine Verwendung im Rahmen eines Bedienens und Beobachtens und eines Engineerings der technischen Anlage ausgebildet und vorgesehen sind, wobei der Operator Station Client (9) dazu ausgebildet ist, eine Zugriffsanfrage eines Operators (2) an den Operator Station Server (8) zu leiten, um einen Zugriff des Operators (2) im Rahmen einer Ausübung einer bestimmten Rolle (3) des Operators (2) auf den Operator Station Server (8) zu ermöglichen, wobei die Rolle (3) eine Menge an Zugriffsrechten (5) des Operators (3) für verschiedene Teile der technischen Anlage umfasst. Das Leitsystem (7) ist dadurch gekennzeichnet, dass die Zugriffsanfrage Informationen über einen aktuellen Standort des Operator Station Clients (9) umfasst, und der Operator Station Server (8) dazu ausgebildet ist, die Menge an Zugriffsrechten des Operators (2) bei unveränderter Rolle (3) des Operators (2) in Abhängigkeit der Informationen über einen aktuellen Standort des Operator Station Clients (9) anzupassen.

## Beschreibung

Die Erfindung betrifft ein Leitsystem für eine technische Anlage, insbesondere eine Fertigungs- oder Prozessanlage, mit den Merkmalen des Anspruchs 1. Außerdem betrifft die Erfindung ein Verfahren zum Zugriff eines Operators einer technischen Anlage, insbesondere einer Fertigungs- oder Prozessanlage, auf einen Operator Station Server der technischen Anlage gemäß Anspruch 3. Zudem betrifft die Erfindung eine Verwendung eines Leitsystems zum Betrieb einer technischen Anlage gemäß Anspruch 4.

Zum Schutz verfahrenstechnischer Anlagen werden für dessen Benutzer (Operatoren, Projekteure) im Leitsystem Zugriffsrechte in Abhängigkeit ihrer Rollen und den ihnen zugewiesenen Anlagenteilen vergeben. Unabhängig davon, wo sich nun ein Gerät für die Bedienung und Beobachtung (z.B. ein Operator Station Client) örtlich befindet, bleiben die zugewiesenen Zugriffsrechte immer dieselben. Nimmt ein Operator seinen Operator Station Client von der Leitwarte mit in die Anlage oder gar nach Hause, ändern sich seine Zugriffsrechte nicht, obgleich er in der Anlage oder zu Hause nicht auf dieselben Zugriffsrechte angewiesen ist. Das kann ein erhebliches Sicherheitsrisiko darstellen. Verschafft sich beispielsweise ein dritter Zugriff auf einen Operator Station Client, an denen der berechtigte Benutzer noch angemeldet ist, so kann dieser im Namen des angemeldeten Benutzers erheblichen Schaden anrichten.

Auch in der Anlage selbst ist es sinnvoll, die Rechte des Benutzers gegenüber der Leitwarte stark einzuschränken, so dass diese nicht versehentlich Stellwerte ändern kann, die nur mit besonderer Vorsicht geändert werden dürfen.

Der Erfindung liegt die Aufgabe zugrunde, die Verwaltung eines Zugriffs eines Operators auf eine technische Anlage in sicherheitstechnischer Hinsicht zu verbessern.

Diese Aufgabe wird gelöst durch ein Leitsystem für ein technisches System mit den Merkmalen des Anspruchs 1. Außerdem wird die Aufgabe gelöst durch ein Verfahren zum Zugriff eines Operators einer technischen Anlage, insbesondere einer Fertigungs- oder Prozessanlage, auf einen Operator Station Server der technischen Anlagegemäß Anspruch 3. Zudem wird die Aufgabe gelöst durch eine Verwendung eines Leitsystems zum Betrieb einer technischen Anlage gemäß Anspruch 4. Vorteilhafte Weiterbildungen ergeben sich aus den abhängigen Ansprüchen.

Ein erfindungsgemäßes Leitsystem für eine technische Anlage, insbesondere eine Fertigungs- oder Prozessanlage, weist wenigstens einen Operator Station Client und wenigstens einen Operator Station Server auf, die für eine Verwendung im Rahmen eines Bedienens und Beobachtens der technischen Anlage ausgebildet und vorgesehen sind, wobei der Operator Station Client dazu ausgebildet ist, eine Zugriffsanfrage eines Operators an den Operator Station Server zu leiten, um einen Zugriff des Operators im Rahmen einer Ausübung einer bestimmten Rolle des Operators auf den Operator Station Server zu ermöglichen, wobei die Rolle eine Menge an Zugriffsrechten des Operators für verschiedene Teile der technischen Anlage umfasst.

Das Leitsystem ist dadurch gekennzeichnet, dass die Zugriffsanfrage Informationen über einen aktuellen Standort des Operator Station Clients umfasst, und der Operator Station Server dazu ausgebildet ist, die Menge an Zugriffsrechten des Operators bei unveränderter Rolle des Operators in Abhängigkeit der Informationen über einen aktuellen Standort des Operator Station Clients anzupassen.

Unter einem Leitsystem wird im vorliegenden Kontext ein computergestütztes technisches System verstanden, das Funktionalitäten zum Darstellen, Bedienen und Leiten einer technischen Anlage wie einer Fertigungs- oder Produktionsanlage umfasst. Das Leitsystem kann Sensoren zur Ermittlung von Messwerten sowie verschiedene Aktoren umfassen. Zudem kann das Leitsystem sogenannte prozess- oder fertigungsnahe Komponenten umfassen, die zur Ansteuerung der Aktoren bzw. Sensoren dienen. Darüber hinaus kann das Leitsystem u.a. Mittel zur Visualisierung der technischen Anlage und zu einem Engineering aufweisen.

Unter dem Begriff Leitsystem sind zusätzlich auch weitere Recheneinheiten für komplexere Regelungen und Systeme zur Datenspeicherung und -verarbeitung zu fassen.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Unter einem "Operator Station Server" wird vorliegend ein Server verstanden, der zentral Daten eines Bedien- und Beobachtungssystems sowie in der Regel Alarm- und Messwertarchive eines (Prozess-)Leitsystems einer technischen Anlage erfasst und Benutzern zur Verfügung stellt. Der Operator Station Server stellt in der Regel eine Kommunikationsverbindung zu Automatisierungssystemen der technischen Anlage her und gibt Daten der technischen Anlage an sogenannte Operator Station Clients weiter, die zur Bedienung und Beobachtung eines Betriebs der einzelnen Funktionselemente der technischen Anlage dienen.

Der Operator Station Server selbst kann über Client-Funktionen verfügen, um auf die Daten (Archive, Meldungen, Tags, Variablen) anderer Operator Station Server zuzugreifen. Dadurch sind Bilder eines Betriebs der technischen Anlage auf dem Operator Station Server mit Variablen anderer Operator Station Server (Server-Server-Kommunikation) kombinierbar.

Bei dem Operator Station Server kann es sich, ohne sich darauf zu beschränken, um einen SIMATIC PCS 7 Industrial Workstation Server der Firma SIEMENS handeln.

Unter einem Operator wird ein menschlicher Bediener des technischen Systems verstanden. Der Operator interagiert mittels spezieller Benutzerschnittstellen mit dem technischen System bzw. dessen Leitsystem und steuert spezielle technische Funktionen des Systems. Hierzu kann der Operator ein Bedien- und Beobachtungssystem des Leitsystems nutzen. Aber auch ein Projekteur, der Anlagenpläne erstellt, Hardwareressourcen allokiert und dgl., wird vorliegend unter dem Begriff des Operators gefasst.

Unter einer Rolle wird in diesem Zusammenhang eine Menge an Zugriffsrechten des Operators für verschiedene Teile der technischen Anlage verstanden. Anders ausgedrückt ist eine Rolle ein Profil, dass dem den Operator Station Client nutzenden Operator bestimmte Aktionen im Rahmen eines Betriebs der technischen Anlage erlaubt und/oder nicht erlaubt. Beispiele für solche Aktivitäten bzw. Zugriffsrechte sind: Lesezugriffe und/oder Schreibzugriffe auf Daten, Absetzen von Steuerbefehlen für bestimmte Aktoren, usw. Die Rolle "Operator" kann beispielsweise die Zugriffsrechte für die Beobachtung von Anlagenbildern, Trendansichten und Alarmansichten und für die Bedienung von Stellwerten, Parametern und Alarmmeldungen (Quittierung) umfassen.

Erfindungsgemäß umfasst die Zugriffsanfrage des Operators auf den Operator Station Server Informationen über einen aktuellen Standort des Operators. Dies wird technisch dadurch ermöglicht, dass die Zugriffsanfrage Informationen über einen aktuellen Standort des Operator Station Clients umfasst. Die Informationen bezüglich des aktuellen Standorts des Operator Station Clients können mittels an sich bekannten Verfahren wie GPS, WLAN-Ortung, GSM-Ortung, RFID oder einem Barcodescanner erfolgen.

Die Zugriffanfrage kann zusätzlich auch eine Angabe über eine Größe einer grafischen Anzeige des Operator Station Clients umfassen. Ist die Anzeige beispielsweise zu klein, um alle (sicherheits-)kritischen Elemente der technischen Anlage visuell darzustellen, kann diese Information von dem Operator Station Server dahingehend verwendet werden, dass diesbezügliche Zugriffsrechte des Operators eingeschränkt werden, um eine Fehlbedienung zu verhindern.

Nach dem Stand der Technik erfolgt die Vergabe von Zugriffsrechten unabhängig davon, an welchem Ort sich der Operator befindet. Mittels des erfindungsgemäßen Leitsystems können dem Operator ortsabhängig unterschiedliche Zugriffsrechte zugeordnet werden. Auf eine Änderung von Rollen wird dabei erfindungsgemäß verzichtet. Vielmehr werden lediglich dynamisch die Zugriffsrechte angepasst, die eine Operator in Abhängigkeit von dem Ort, an dem er sich befindet, haben darf. Hierdurch bedarf es keine aufwändigen Definition einer Vielzahl von unterschiedlichen Rollen. Dieser würde es bedürfen, wenn bei jeder sicherheitsrelevanten Veränderung des Aufenthaltsorts des Operators (bspw. bei einem Verlassen des Werksgeländes der technischen Anlage) dem Operator eine neue Rolle zugeordnet werden müsste.

Auch für das Engineering (CFC-Pläne, Anlagenbilder, SFC-Plane, Hardware, usw.) sind Zugriffsrechte für die Projekteure erforderlich. Da in modernen Leitsystemen ein Multi-User Engineering durch Webtechnologien usw. gleichzeitig an unterschiedlichen Orten in der Welt möglich ist, ist es aus sicherheitstechnischen Gründen sinnvoll, die Zugriffsrechte der Projekteure in Abhängigkeit ihres Aufenthaltsortes mittels eines erfindungsgemäßen Leitsystems einzuschränken. Dabei kann beispielsweise ein Projekteur nur auf dem Werksgelände der technischen Anlage vertrauliche Batch-Rezepte einsehen und ändern - jedoch nicht auf einer Dienstreise außerhalb der technischen Anlage.

Die Überprüfung der Zugriffsrechte kann nach Ablauf einer bestimmten Zeitdauer periodisch erfolgen. Es ist aber genauso möglich, bei jeder Zugriffsanfrage des Operators die Überprüfung vorzunehmen. Darüber hinaus ist es möglich, die Überprüfung der Zugriffsrechte nur bei Zugriffsanfragen durchzuführen, die eine bestimmte Relevanz aus sicherheitstechnischer Sicht aufweisen.

Bevorzugt ist der Operator Station Client dazu ausgebildet und vorgesehen, sich im Rahmen der Zugriffsanfrage gegenüber dem Operator Station Server zu authentifizieren. Dadurch kann gewährleistet sein, dass es sich auch um einen bestimmten Operator handelt, der die Zugriffsanfrage an den Operator Station Server stellt.

Die Aufgabe wird zudem gelöst durch ein Verfahren zum Zugriff eines Operators einer technischen Anlage, insbesondere einer Fertigungs- oder Prozessanlage, auf einen Operator Station Server der technischen Anlage mittels eines Operator Station Clients, wobei der Operator Station Client und der Operator Station Server für eine Verwendung im Rahmen eines Bedienens und Beobachtens der technischen Anlage ausgebildet und vorgesehen sind, und wobei der Operator Station Client eine von dem Operator gestellte Zugriffsanfrage an den Operator Station Server leitet, um einen Zugriff des Operators im Rahmen einer Ausübung einer bestimmten Rolle des Operators auf den Operator Station Server zu ermöglichen, und wobei die Rolle eine Menge an Zugriffsrechten des Operators für verschiedene Teile der technischen Anlage umfasst.

Das erfindungsgemäße Verfahren ist dadurch gekennzeichnet, dass die Zugriffsanfrage Informationen über einen aktuellen Standort des Operator Station Clients umfasst. Zudem passt der Operator Station Server die Menge an Zugriffsrechten des Operators bei unveränderter Rolle des Operators in Abhängigkeit der Informationen über einen aktuellen Standort des Operator Station Clients an.

Die Aufgabe wird zudem durch die Verwendung eines zuvor beschriebenen Leitsystems zum Betrieb einer technischen Anlage, insbesondere einer Fertigungs- oder Prozessanlage, gelöst.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit den Zeichnungen näher erläutert wird.

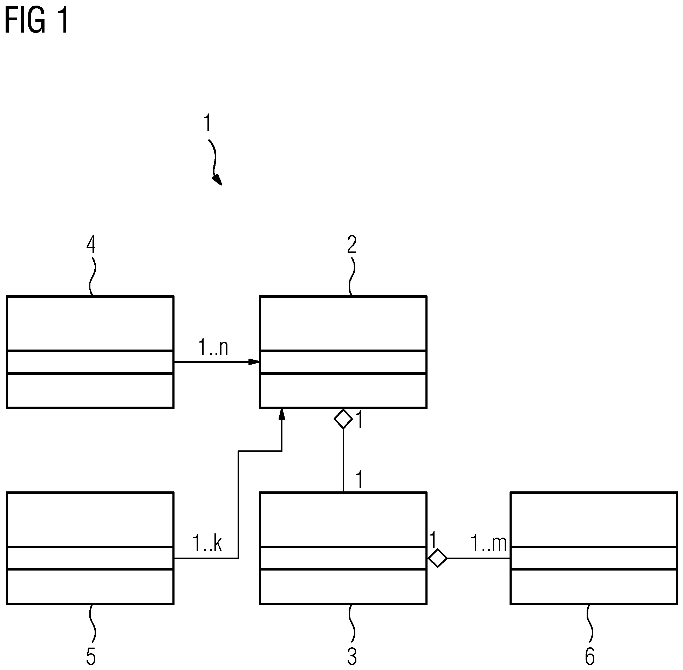

In FIG 1 ist ein Objektmodell 1 eines Leitsystems 7 einer technischen Anlage dargestellt. Einem Operator 2 der technischen Anlage kann eine bestimmte Rolle 3 in Bezug auf die gesamte technische Anlage oder bestimmte Anlagenteile 4 (bezeichnet mit l..n) zugewiesen werden. Ein erfindungsgemäßes Leitsystem 7 ermöglicht zusätzlich eine Zuweisung von Zugriffsrechten 5 (bezeichnet mit l..m) innerhalb der bestimmten Rolle 3 in Abhängigkeit eines oder mehrerer Orte 6 (bezeichnet mit 1..k).

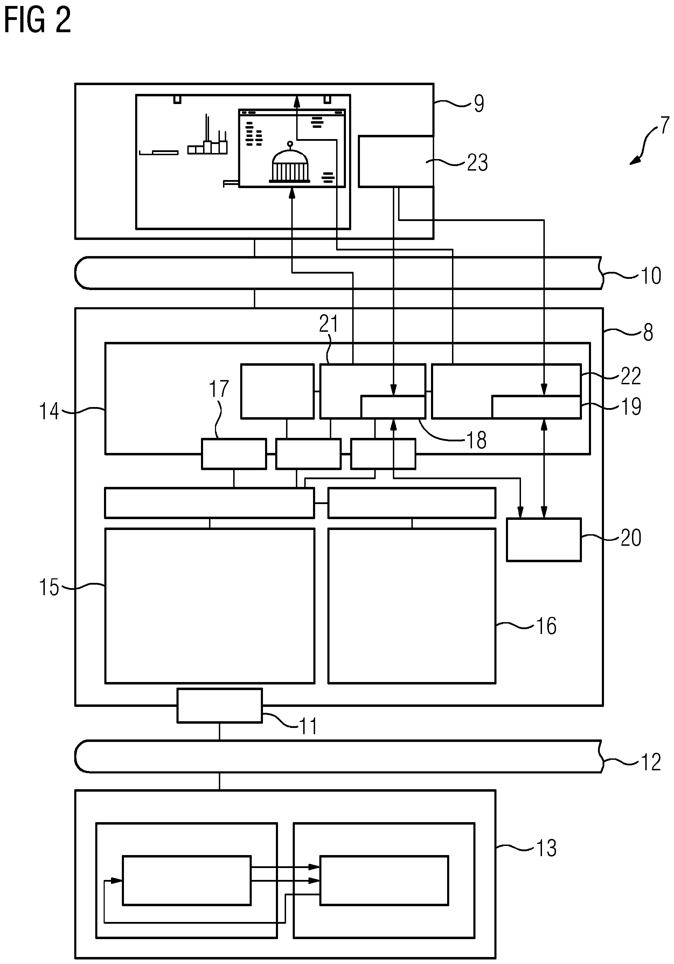

FIG 2 zeigt einen Teil eines erfindungsgemäßen Leitsystems 7 einer als verfahrenstechnischen Anlage ausgebildeten technischen Anlage. Das Leitsystem 7 umfasst einen Server eines Bediensystems bzw. einen Operator Station Server 8 und einen dazugehörigen Operator Station Client 9. Der Operator Station Server 8 und der Operator Station Client 9 sind über einen Terminmalbus 10 miteinander und mit nicht dargestellten weiteren Komponenten des Leitsystems 1 wie einem Engineering System Server oder einem Prozessdatenarchiv verbunden.

Ein Benutzer bzw. Operator hat mittels des Operator Station Clients 9 mittels des Terminalbus 10 im Kontext eines Bedienens und Beobachtens Zugriff auf den Operator Station Server 8. Der Terminalbus 10 kann, ohne sich darauf zu beschränken, beispielsweise als Industrial Ethernet ausgebildet sein.

Der Operator Station Server 2 weist eine Geräteschnittstelle 11 auf, die mit einem Anlagenbus 12 verbunden ist. Hierüber kann der Operator Station Server 8 mit einem (externen) Gerät 13 wie einem Automatisierungsgerät kommunizieren. Bei dem angeschlossenen Gerät 13 kann es sich dabei alternativ auch um eine Applikation, insbesondere Webapplikation, handeln. Im Rahmen der Erfindung kann eine beliebige Zahl an Geräten 13 und/oder Applikationen an dem Operator Station Server 8 angeschlossen sein. Der Anlagenbus 12 kann, ohne sich darauf zu beschränken, beispielsweise als Industrial Ethernet ausgebildet sein. Das Gerät 13 kann wiederum mit einer beliebigen Anzahl an Subsystemen (nicht dargestellt) verbunden sein.

In dem Operator System Server 8 ist ein Visualisierungsdienst 14 integriert, über den eine Übertragung von (Visualisierungs-)Daten an den Operator Station Client 9 erfolgen kann. Zudem weist der Operator Station Server 8 ein Prozessabbild (Process Image) 15, ein lokales Datenarchiv 16 und einen Alarmdienst 17 auf. Jede für eine etwaige Beschränkung in Frage kommende computerimplementierte Komponente des Operator Station Servers 8 weist eine Instanz 18, 19 eines Lokalisierungsdienstes 20 auf. Im vorliegenden Beispiel ist in dem Visualisierungsdienst 14 eine erste Instanz 18 in einer Komponente "Domain Logic" 21 und eine zweite Instanz 19 in einer Komponente "Alarm Banner" 22 implementiert.

Damit die Instanzen 18, 19 eine ortsabhängige Prüfung der an einen Operator der technischen Anlage vergebenen Zugriffsrechte vornehmen können, benötigen sie den jeweiligen Aufenthaltsort des Operators. Dieser wird mittels einer Lokalisierungskomponente 23 ermittelt, der in dem Operator Station Client 9 implementiert ist. Zur Lokalisierung können dabei verschiedene Verfahren zur Anwendung kommen, wie z.B. GPS, WLAN-Ortung, GSM-Ortung, RFID, Barcodescanner, usw.

Die Instanzen 18, 19 des Lokalisierungsdienstes 20 verwenden in dem lokalen Datenarchiv 16 hinterlegte Vergleichsdaten, um zu prüfen, welche Zugriffsrechte dem Operator in Abhängigkeit seines aktuellen Aufenthaltsortes zustehen. Die Vergleichsdaten werden in der Regel während einer Engineering-Phase der technischen Anlage erstellt und in dem lokalen Datenarchiv 16 hinterlegt. Es ist auch möglich, dass die Vergleichsdaten auf externen, cloudbasierten Speicherorten hinterlegt sind (in FIG 2 nicht dargestellt). Die Rolle, die dem Operator in Hinsicht auf die technische Anlage oder einen Teilbereich der technischen Anlage zugewiesen ist, wird bei dieser dynamischen Anpassung der Zugriffsrechte nicht verändert.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Leitsystem (7) für eine technische Anlage, insbesondere eine Fertigungs- oder Prozessanlage, das wenigstens einen Operator Station Client (9) und wenigstens einen Operator Station Server (8) aufweist, die für eine Verwendung im Rahmen eines Bedienens und Beobachtens und eines Engineerings der technischen Anlage ausgebildet und vorgesehen sind,
wobei der Operator Station Client (9) dazu ausgebildet ist, eine Zugriffsanfrage eines Operators (2) an den Operator Station Server (8) zu leiten, um einen Zugriff des Operators (2) im Rahmen einer Ausübung einer bestimmten Rolle (3) des Operators (2) auf den Operator Station Server (8) zu ermöglichen,
wobei die Rolle (3) eine Menge an Zugriffsrechten (5) des Operators (3) für verschiedene Teile der technischen Anlage umfasst,
**dadurch gekennzeichnet, dass**
die Zugriffsanfrage Informationen über einen aktuellen Standort des Operator Station Clients (9) umfasst,
und der Operator Station Server (8) dazu ausgebildet ist, die Menge an Zugriffsrechten des Operators (2) bei unveränderter Rolle (3) des Operators (2) in Abhängigkeit der Informationen über einen aktuellen Standort des Operator Station Clients (9) anzupassen.

2. Leitsystem (7) nach Anspruch 1, bei dem der Operator Station Client (9) dazu ausgebildet ist, sich im Rahmen der Zugriffsanfrage gegenüber dem Operator Station Server (8) zu authentifizieren.

3. Verfahren zum Zugriff eines Operators (2) einer technischen Anlage, insbesondere einer Fertigungs- oder Prozessanlage, auf einen Operator Station Server (8) der technischen Anlage mittels eines Operator Station Clients (9), wobei der Operator Station Client (9) und der Operator Station Server (8) für eine Verwendung im Rahmen eines Bedienens und Beobachtens der technischen Anlage ausgebildet und vorgesehen sind,
wobei der Operator Station Client (9) eine von dem Operator (2) gestellte Zugriffsanfrage an den Operator Station Server (8) leitet, um einen Zugriff des Operators (2) im Rahmen einer Ausübung einer bestimmten Rolle (3) des Operators (2) auf den Operator Station Server (8) zu ermöglichen,
wobei die Rolle (3) eine Menge an Zugriffsrechten (5) des Operators (2) für verschiedene Teile der technischen Anlage umfasst,
**dadurch gekennzeichnet, dass**
die Zugriffsanfrage Informationen über einen aktuellen Standort des Operator Station Clients (9) umfasst,
und der Operator Station Server (8) die Menge an Zugriffsrechten (5) des Operators (2) bei unveränderter Rolle (3) des Operators (2) in Abhängigkeit der Informationen über einen aktuellen Standort des Operator Station Clients (9) anpasst.

4. Verwendung eines Leitsystems (7) gemäß einem der Ansprüche 1 oder 2 zum Betrieb einer technischen Anlage, insbesondere einer Fertigungs- oder Prozessanlage.
